# EUROPEAN PATENT APPLICATION

(11) **EP 0 566 304 A1**
(43) Date of publication of application: **20.10.1993**
(21) Application number: 93302683.3
(22) Date of filing: 06.04.1993
(51) Int. Cl.: B01D 53/34, F23G 7/06, F26B 23/02

(54) **Gas treatment process**

(30) Priority: 11.04.1992 GB 9208048
(71) Applicant: AIRAQUA ENGINEERING (CONSULTANTS) Ltd., Wilmslow, Cheshire SK9 2LG (GB)
(72) Inventor: Cooper, Alan, Wilmslow, Cheshire SK9 2LG (GB); Little, Christopher Martin Donald, Cheltenham, Gloucestershire GL52 3PX (GB)
(74) Representative: Thompson, George Michael

(57) **Abstract**

The solvent laden waste gases from the drying chamber (2) of an industrial process plant (1) are supplied directly to an inlet (11) of an internal combustion engine (8). The exhaust gases of the engine may be used to heat air which is supplied to the drying chamber (2) or exhaust gas may be supplied directly to the drying chamber. The engine drives a generator (9) which can supply electrical energy to an external load and the engine has an inlet (12) for gaseous fuel which is supplied to the engine when there is insufficient solvent in the waste gases to drive the engine.

## Description

This invention relates to an apparatus for and a method of treating the waste gases of an industrial process in such a way as to minimise the emission of noxious components into the atmosphere.

The object of the invention is to provide a method and apparatus for the purpose specified in a simple and convenient form.

According to the invention an apparatus for the purpose specified comprises an internal combustion engine, means for conveying the waste gases from the process to an inlet of the engine, means for supplying high grade fuel to the engine to permit operation of the engine in the event that the waste gases from the process contain insufficient low grade fuel to allow operation of the engine and means for abstracting from the engine energy produced by the combustion of fuel therein.

According to another aspect of the invention a method of operating a gaseous fuel engine comprises admitting into an engine cylinder during a suction stroke a substantially oxygen free gaseous fuel, compressing the gaseous fuel during the following compression stroke, injecting into the engine cylinderator near the end of the compression stroke compressed air or an oxygen rich fluid and igniting the resulting mixture.

Examples of an apparatus for treating the waste gases of an industrial process will now be described with reference to the accompanying schematic diagrams in which:-
Figure 1 shows one form of the apparatus, and
Figure 2 shows another form of the apparatus.

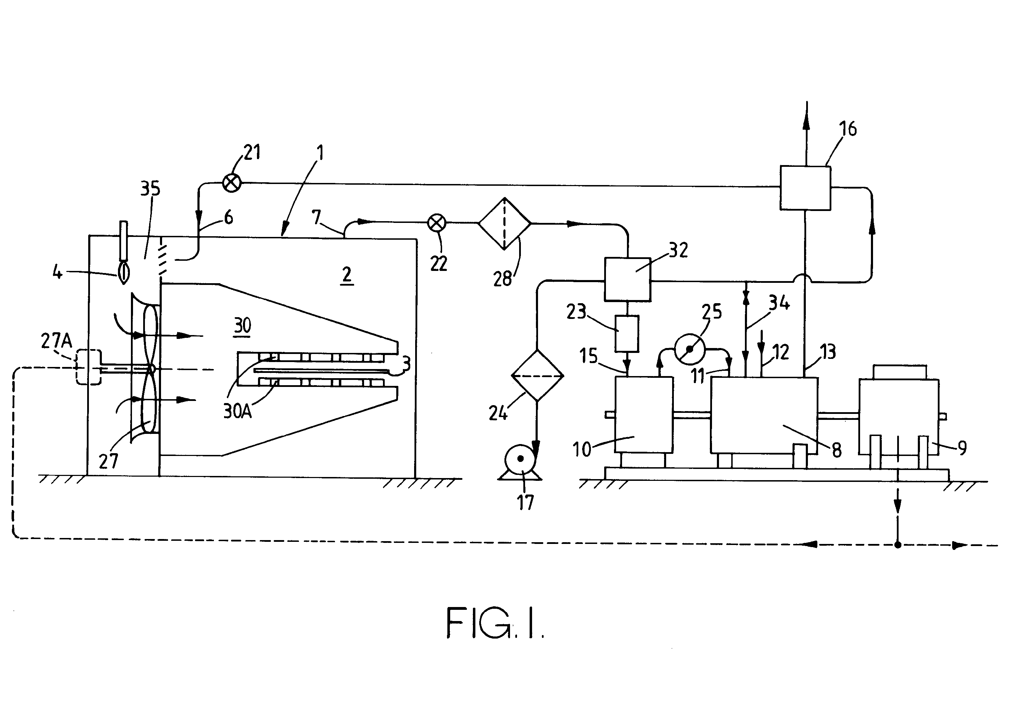

With reference to Figure 1 there is depicted at 1 an industrial process plant which comprises a drying chamber 2 through which passes a continuous conveyor 3 upon which articles for example painted articles to be dried, are placed for transport through the chamber. Located within the chamber 2 is a plenum 30 which has nozzles 30A through which heated gas is directed atthe articles on the conveyor. Alternatively item 3 may comprise a web of material to be dried after coating or impregnation with material containing hydrocarbon solvents.

In practice the process plant will be provided with a number of drying chambers through which the conveyor extends so that articles pass through the chambers in turn. The temperature of the heated gas within the individual chambers will be different. For the purpose of the present description the process plant will be considered as just one chamber except where specific reference is made to a number of chambers.

The heated gas is delivered to the plenum 30 by means of a fan 27 which is driven by an electric motor 27A, the fan drawing the heated gas from an inlet chamber 35 in which there is located a fuel heater 4. This may be a direct gaseous fuel heater or it may be an electric heater or one powered indirectly by steam or oil. The heated gas is supplied to the chamber 35 through a filterfrom an area surrounding the plenum which is adjacent an inlet 6 through which heated fresh air enters into the drying chamber. The heated gas which is directed at the articles carried by the conveyor causes evaporation of the solvent of the paint and solvent laden gas can leave the drying chamber through an outlet 7.

It is to be understood that the drying process may not only involve evaporation of solvent but may involve a chemical process such as curing which may result in gaseous compounds other than solvent in the gas leaving the chamber. Before the gas can be discharged to the atmosphere it has to be treated to remove harmful compounds. It is known to attempt to recover the solvent but since in practice a number of hydrocarbon solvents may be incorporated into the paint, solvent recovery generally results in impure recovered solvent and in general the practice is to rely on high temperature incineration or catalytic oxidation. In the case of high temperature incineration the solvent laden gas is supplied to a gas fired recuperative oxidiser from which heated clean air may be recycled to the drying chamber in order to minimise energy loss. As mentioned in most instances the solvents are hydrocarbons and where such a solvent is employed, it represents a fuel which is burnt in the oxidiser and the amount of fuel which has to be supplied to the oxidiser can be reduced as the concentration of solvent increases. Nevertheless, there is a substantial energy loss and the equipment is expensive and costly to maintain and is also bulky.

In accordance with the invention it is proposed to supply the solvent laden gas which is largely air, to an internal combustion engine 8 which conveniently is of the reciprocating piston gas engine type employing spark ignition. It is possible however to employ a gas turbine engine or a rotary engine or a dual fuel compression ignition engine in which a small quantity of high grade diesel fuel is injected to initiate combustion.

The solvent laden gas is supplied to an inlet 11 of the engine by means of a blower 10 having an inlet 15 which is connected to the outlet 7 of the drying chamber. The exhaust outlet 13 of the engine incorporates a heat exchanger 16 through which fresh air flows to the air inlet 6 of the drying chamber 2. It is convenient, but not essential, to supply the fresh air by means of a blower 17 which overcomes system resistance. The air is preheated in a further heat exchanger 32, where it acts to cool the solvent laden gas supplied to the blower 10, before it flows through the heat exchanger 16. Filters 24 and 28 are utilised to filter the air delivered by the blower 17 and the solvent laden gas supplied to the engine.

The engine 8 is utilised to drive the blower 10 either directly as shown, or through a variable ratio coupling. The blower may be driven by an engine exhaust driven turbine. The engine is coupled to an electric generator 9 which is used to supply power to the motor 27A and to a drive motor for the conveyor and forthe blower 17. As an alternative the motor 27Acan be replaced by a mechanical or hydraulic coupling connected to the engine. Conveniently the generator is of a size so that power can be supplied to an external load. The engine also has an inlet 12 for gaseous fuel such as natural gas.

Assuming that the plant is cold, before drying of articles or the coated web can take place, the engine has to be started and the gas which is supplied through the plenum 30 has to be raised to the correct temperature. The engine is started using gaseous fuel which is supplied through the inlet 12 and the gaseous fuel heater4 in the chamber 35 is lit. The motor 27A and the motor for the blower 17 can be supplied with power from an external source if desired during the start up procedure. The fuel supply to the engine is adjusted so that the engine runs at a predetermined speed and the gaseous fuel supply to the heater4 is adjusted so that the gas temperature within the plenum reaches a predetermined value. It will be appreciated that as the engine starts to deliver hot exhaust gas, the air which is supplied to the chamber will become heated so that some modulation of the gas supply to the burner 4 will be required. Once the engine has started the generator 9 is utilised to provide the power for the motor 27A and the motors for the conveyor 3 and the blower 17 and may be used to supply power to the external load.

When components are placed on the conveyor 3 and are exposed to the heated gas, solvent evaporation takes place and solvent laden gas will flow through the outlet 7 and will be cooled by the heat exchanger 32 and delivered to the engine by the blower 10. If the solvent is a hydrocarbon, it contributes to the fuel input to the engine and therefore the supply of gaseous fuel to the engine can be reduced. The concentration of solvent in the gas flowing to the engine will vary as the rate at which articles are placed on the conveyor varies and hence it is necessary to constantly monitor the solvent concentration of the gas leaving the drying chamber, and to adjust the supply of gaseous fuel. The solvent and any other combustible materials are burnt in the engine and this results in a substantially pollutant free exhaust from the engine.

If the load imposed on the engine by the generator increases, the gaseous fuel supply to the engine will have to be increased in order to maintain the engine speed. It is therefore necessary to monitor the engine speed and adjust the gaseous fuel supply thereto and it is also necessary to monitorthe temperature of gas within the plenum and to adjust the gaseous fuel supply to the heater 4 if correction of the temperature cannot be achieved by alteration of the gaseous fuel flow to the engine. The concentration of solvent in the gas which is supplied to the engine has to be carefully controlled to minimise the risk of explosion in the plant.

The flow of solvent laden gas into the inlet 11 of the engine from the blower 10 may be controlled by a valve 25. In this way the concentration of solvent can be controlled. However if the number of articles passing through the drying chamber is low and the valve 25 is closed to maintain the solvent concentration there may be insufficient air to support combustion of fuel within the engine particularly if the engine by way of the generator 9 is supplying an external load. In this case it is necessary to supply additional air to the engine and for this purpose a valve controlled inlet 34 is provided which admits air into the engine from the blower 17.

The flow of solvent laden gas to the inlet 11 of the engine will be of a pulsed nature and in order to prevent these pulses or indirect pulses which may be generated by the blower, reaching the drying chamber, a pulse damper 23 is located at the blower inlet.

The fan 27 acts to generate a positive pressure within the plenum 30 as compared with the pressure in the drying chamber surrounding the plenum in order to provide high velocity gas flow over the articles on the conveyor. In some process plants the gas flow through the nozzles 30A may be used to support the web by an air cushion effect.

The operation of the equipment is controlled by an electronic control unit which is responsive to the outputs of various sensors and on the basis of stored information controls the valve 25 and a further valve which controls air flow into the engine through the inlet 34, the flow of gaseous fuel into the engine and the excitation of the generator. The control unit is supplied with at least an engine speed signal as well as a signal representing the solvent concentration. In addition in order to ensure that the system is functioning correctly a hydrocarbon/oxygen sensor can be provided to monitor the engine exhaust gas.

The rate of flow of solvent laden gas which leaves the process plant through the outlet 7 may be fixed in which case the solvent concentration will vary as the solvent evaporation rate varies. As an alternative and as a result of adjustment of the valve 25, the solvent concentration may be kept substantially constant generally at a higher level, and in this case the rate of flow of the solvent laden gas is varied. The engine is normally controlled so that it operates at a fixed speed and the rate of extraction of the solvent laden gas will be at least in part dependent upon the load imposed on the engine by the generator.

Each of the drying chambers 2 of the complete plant may have associated with it an engine and the associated parts to deal with the exhaust gases from that chamber. However, it may be more economic and practical to provide a single engine to deal with the exhaust gases of the complete plant. In this case the individual chambers may require to have different air/solvent laden gas flows and therefore as shown in Figure 1 balancing valves 22, 21 are provided at the inlet and outlet of each chamber. The valves can be adjusted to obtain the desired flow rates in the individual chambers.

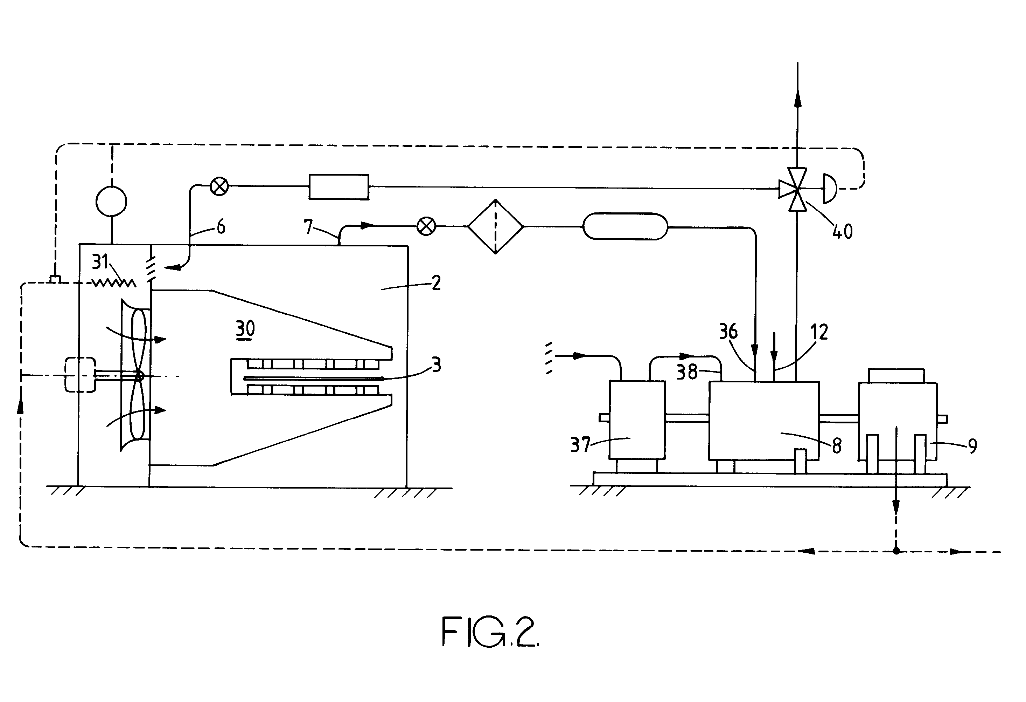

An alternative arrangement is seen in Figure 2 which utilizes the reference numerals of Figure 1 where the parts have the same function.

In the arrangement which is shown in Figure 2 the gas which is supplied to the drying chamber 2 is substantially oxygen free as will be explained, and therefore the gaseous fuel heater 4 shown in the arrangement of Figure 1, is replaced by an electrical heater 31 which is powered by the generator 9. Other forms of indirect heater may however be employed. The heat exchanger 16 in the arrangement of Figure 1 is replaced by a valve 40 so that exhaust gas from the engine can be directed to the inlet 6. The exhaust gas will be hot and it is possible that the heater 31 will only be required at start up.

As in the arrangement of Figure 1 the gas is directed at the articles on the conveyor 3 from the plenum 30 and becomes laden with solvent. The outlet 7 of the drying chamber is connected to an engine valve controlled inlet 36 of the engine whereby during the suction stroke of the engine, the solvent laden gas is drawn into the engine. During the following compression stroke the solvent laden gas is compressed but because it is substantially oxygen free the risk of pre-ignition is significantly reduced and the compression ratio of the engine can be appreciably higherthan in the arrangement of Figure 1. Moreover, it is anticipated that it will be possible to allow a much higher solvent concentration in the gas leaving the drying chamber because of the reduced explosion risk due to the lack of oxygen.

As with the arrangement shown in Figure 1 gaseous fuel can be supplied to the engine through an inlet 12 if the solvent concentration is not high enough to allow operation of the engine or if the power taken from the engine by the generator 9 is increased. Although a separate inlet 12 is shown for the gaseous fuel supply to the engine, it is anticipated that it will be possible to mix the gaseous fuel with the solvent laden gas which is supplied to the inlet 36.

In order to achieve combustion of the fuel i.e. the gaseous fuel and the solvent, it is necessary to supply free oxygen to the engine and this is achieved by means of a compressor 37 which is driven by the engine and which supplies air under pressure to an engine valve controlled inlet 38. The air is delivered to the engine towards the end of the compression stroke prior to ignition of the fuel and the amount of airwhich is supplied should be only as much as is required to ensure proper combustion of the fuel supplied to the engine so that the portion of the engine exhaust gas which is supplied to the drying chamber is substantially oxygen free and the portion of the engine exhaust gas which escapes to the atmosphere is free of noxious substances.

As with the arrangement of Figure 1 the amount of gaseous fuel which has to be supplied to the engine depends upon the type of solvent and its concentration and also on the amount of power which is required to drive the generator. However in the arrangement of Figure 2 it is also necessary to vary the amount of air which is supplied to the engine if there is a variation in the amount of fuel which is supplied to the engine. Whilst air is the preferred source of oxygen it may be possible to inject pure oxygen into the engine in which case the compressor 37 may not be required.

As with the arrangement shown in Figure 1 an electronic control unit is utilized to control the operation of the system. In this case it is also necessary to provide for adjustment of the output of the compressor 37 as well as the generator excitation and the flow of gaseous fuel to the engine.

The method described with reference to Figure 2 of operating the engine may be used to consume other low grade gaseous fuels such for example as land fill gas. In this particular case it may not be necessary to supply additional fuel since land fill gas is mostly methane.

## Claims

1. An apparatus for treating the waste gases of an industrial process so as to minimise the emission of noxious components into the atmosphere characterised by an internal combustion engine (8), conduit means for conveying the waste gases from the process to an inlet (11, 36) of the engine, means (12) through which high grade fuel can be supplied to the engine in the event that the waste gases from the process contain insufficient low grade fuel to allow operation of the engine, and means (16,9) for abstracting from the engine, energy produced by the combustion of fuel therein.

2. An apparatus according to Claim 1, characterised by a blower (10) through which the waste gases are delivered to the engine inlet (11).

3. An apparatus according to Claim 1 or Claim 2, characterised by a first heat exchanger (16) for effecting heat exchange between the exhaust gases of the engine and fresh air which is supplied to the industrial process.

4. An apparatus according to Claim 3, characterised by a second heat exchanger (32) for effecting heat exchange between the waste gases prior to their supply to the blower (10) and the fresh air prior to it flowing through the first heat exchanger (16).

5. An apparatus according to Claim 2, characterised by valve means (25) operable to control the flow of the waste gases to the inlet (11) of the engine and a further valve controlled inlet (34) through which fresh air can be admitted to the engine.

6. An apparatus according to Claim 4, characterised by a further blower (17) operable to deliver the air through the first and second heat exchangers (16, 32).

7. An apparatus according to Claim 1, characterised in that the means for abstracting energy from the engine comprises an electric generator (9).

8. An apparatus according to Claim 1, characterised by means (37) for supplying air or an oxygen rich fluid under pressure to a further inlet (38) of the engine.

9. An apparatus according to Claim 8, characterised in that the means for supplying air comprises a compressor (37) driven by the engine.

10. An apparatus according to Claim 9, characterised by valve means (40) operable to divert a proportion of the exhaust gas of the engine to the industrial process.

11. An apparatus according to Claim 10, characterised in thatthe means for abstracting energy from the engine comprises an electric generator (9).

12. A method of operating a gaseous fuel engine comprising admitting into an engine cylinder during a suction stroke a substantially oxygen free gaseous fuel, compressing the gaseous fuel during the following compression stroke, injecting into the engine cylinder at or near the end of the compression stroke compressed air or an oxygen rich fluid and igniting the resulting mixture.
